# EUROPEAN PATENT APPLICATION

(11) **EP 1 248 315 A2**
(43) Date of publication of application: **09.10.2002**
(21) Application number: 02007577.6
(22) Date of filing: 03.04.2002
(51) Int. Cl.: H01M 10/12, H01M 2/12

(54) **Dry-charged lead acid battery and process for the production thereof**

(30) Priority: 03.04.2001 JP 2001105271; 25.05.2001 JP 2001157938
(71) Applicant: Japan Storage Battery Co., Ltd., Kyoto-shi, Kyoto 601-8520 (JP)
(72) Inventor: Doyama, Yasutaka, c/o Japan Storage Battery Co.Ltd, Kyoto-shi, Kyoto 601-8520 (JP); Enomoto, Tomoyuki, Japan Storage Battery Co.Ltd., Kyoto-shi, Kyoto 601-8520 (JP)
(74) Representative: Grünecker, Kinkeldey, Stockmair & Schwanhäusser Anwaltssozietät

(57) **Abstract**

A dry-charged lead acid battery (10) is formed by removing the electrolyte through an aperture (13a), and then sealing the aperture (13a) with a sealing plug with valve (20) having a rubber check valve provided therein. Since the formation process in the battery container is employed, the required number of production steps and the cost can be reduced as compared with the conventional dry-charged lead acid battery. Further, since a check valve for preventing the entrance of the external air and opening at a predetermined pressure to allow the leakage of the gas in the battery container to the exterior is used to keep the battery container airtight, the self-discharge of the battery during the storage period between the filling of the electrolyte and the beginning of the use of the battery can be prevented, making it possible to inhibit defective airtightness due to damage of battery container by the production of gas in the battery.

## Description

### FIELD OF THE INVENTION

The present invention relates to a dry-charged lead acid battery which is rendered usable upon filling of an electrolyte thereinto.

### BACKGROUND OF THE INVENTION

Examples of lead acid battery is one comprising formed electrodes received in a battery container containing diluted sulfuric acid as an electrolyte, i.e., so-called electrolyte-filled charged battery (hereinafter referred to as "liquid type storage battery"). This type of a battery has the following disadvantages. Since the battery container keeps the electrolyte contained therein, it undergoes self-discharge with the passage of time until it is actually used and thus must be regularly charged supplementarily. When the battery is further allowed to stand over an extended period of time, so-called sulfation occurs, that is, lead sulfate is accumulated in the electrodes, making it difficult for the battery to recover even when supplementarily charged and hence remarkably reducing the battery life. Further, since diluted sulfuric acid flows in the battery container during transportation, it raises a safety problem during transportation.

As a solution to the problems there is proposed a dry-charged lead acid battery. This dry-charged lead acid battery is a so-called electrolyte-free charged battery comprising formed electrodes received in a battery container free of electrolyte. The battery is filled with an electrolyte before use. Since no electrolyte is contained in the battery container until use, charge capacity is not lost during standing, making it possible to keep the electrodes charged. In this arrangement, this type of a battery can be readily used or rendered ready-to-use when the battery is filled with an electrolyte. Even during transportation, so far as the battery is not in use, no electrolyte is contained in the battery container, keeping the battery safe.

This type of a dry-charged lead acid battery has heretofore been produced by tank formation process. In accordance with this tank formation process, unformed positive and negative electrodes are connected juxtaposed to each other in the formation tank. These electrodes are then electrically energized in an electrolyte so that they are formed. These formed electrodes are dried, and then mounted in a battery container.

However, the production of the battery by this tank formation process is disadvantageous in that it adds to production cost. This is because the tank formation process requires complicated steps such as rinsing and drying of formed positive electrode and rinsing and vacuumdrying of negative electrode which add to the number of production steps while an ordinary liquid type storage battery is produced by a the formation process in the battery container which comprises assembling unformed positive and negative electrodes into a battery, and then filling the battery container with an electrolyte.

It might have been considered that the production of dry-charged lead acid battery be accomplished by the formation process in the battery container followed by the eventual removal of the electrolyte. However, since thoroughly drying of the electrodes in the battery container is difficult, the electrodes have some electrolyte left attached thereto, giving an apprehension that the electrodes can undergo self-discharge. Further, when air enters into the battery container, the oxidation of the metallic lead proceeds to loose its charge capacity.

The invention has been worked out under these circumstances. An aim of the invention is to provide a dry-charged lead acid battery which is fairly ready-to-use while reducing the cost.

### SUMMARY OF THE INVENTION

In accordance with the invention, the electrolyte is removed from the battery container after the formation in the battery container to produce a battery, and an arrangement is given such that a check valve for checking the entrance of the exterior air is provided across the interior and the exterior of the battery container to keep the battery container airtight. Since formation in the battery container is employed, the number of steps required for production and the cost can be reduced as compared with the conventional dry-charged lead acid battery prepared by tank formation.

In accordance with the present inventor's study, the results of analysis of the change of self-discharge amount in a liquid lead acid battery with time during standing show that the "self-discharged amount" decreases proportionally as the "specific gravity of electrolyte" decreases due to discharge reaction. In other words, as the specific gravity of the electrolyte rises, the self-discharged amount rises. On the contrary, as the specific gravity lowers, the self-discharged amount lowers to inhibit discharge. In this respect, the dry-charged lead acid battery prepared by formation in the battery container has the electrolyte left behind on the electrodes in an extremely slight in the total amount and thus shows an extremely great drop of the specific gravity of the electrolyte per unit discharged amount as compared with the liquid lead acid battery. Accordingly, the dry-charged lead acid battery prepared by formation in the battery container shows a remarkable drop of the specific gravity of the electrolyte with a slight amount of discharge, inhibiting somewhat self-discharge.

In accordance with the invention, a check valve is further provided to establish a mechanism of preventing the entrance of the external air (air), further assuring that the acceleration of oxidation of the electrodes can be inhibited and hence making it possible to keep the battery highly ready-to-use even after prolonged standing. Further, when the pressure in the battery container rises beyond a predetermined value, the check valve opens to allow the gas in the battery container to leak to the exterior, making it possible to inhibit defective airtightness such as damage due to expansion of battery container under pressure.

The term "check valve" as used herein is meant to indicate a valve which closes when the pressure in the battery container is equal to or lower than the atmospheric pressure and opens when the pressure in the battery container rises beyond the atmospheric pressure.

The check valve is predetermined to open at a pressure of higher than 0 kPa and not higher than 50 kPa. By predetermining the check valve to open at a pressure of highter than 0 KPa, at least the entrance of the external air into the battery container can be prevented, making it possible to prevent self-discharge, i.e., oxidative discharge of negative active material by oxygen. By predetermining the check valve to open at a pressure of not higher than 50 kPa, defective airtightness such as damage due to expansion of battery container under pressure can be prevented.

Further, the check valve is preferably provided in a sealing plug for use in the filling or removal of the electrolyte to form a sealing plug with valve.

Moreover, the check valve may be left provided during battery use or may be removed before battery use. In the case where as the aperture for filling of the electrolyte there is used the aforementioned sealing plug with valve, the aforementioned sealing plug with valve may be removed shortly before the use of the lead acid battery so that the battery is filled with the electrolyte. The sealing plug with valve is then again mounted on the aperture. Alternatively, a separate sealing plug may be used to close the aperture.

### BRIEF DESCRIPTION OF THE DRAWINGS

Fig. 1 is a partially cutaway perspective view of the dry-charged lead acid battery according to a first embodiment of implication of the invention;
Fig. 2 is a sectional view of the sealing plug with valve;
Fig. 3 is a perspective view of the sealing plug with valve;
Fig. 4 is an enlarged sectional view of the aperture provided with a sealing plug with valve;
Fig. 5 is a perspective view of the sealing plug;
Fig. 6A is a diagram illustrating the relationship between the standing period and the open circuit voltage, and Fig. 6B is a diagram illustrating the relationship between the battery inner pressure and the battery container deformation;
Fig. 7 is a perspective view of the sealing plug with valve and the aperture according to a second embodiment of implication of the invention;
Fig. 8 is a perspective view illustrating how the sealing plug with valve is mounted on the aperture; and
Fig. 9 is a sectional view of another embodiment of the sealing plug with valve.

### DETAILED DESCRIPTION OF THE INVENTION

### <First embodiment>

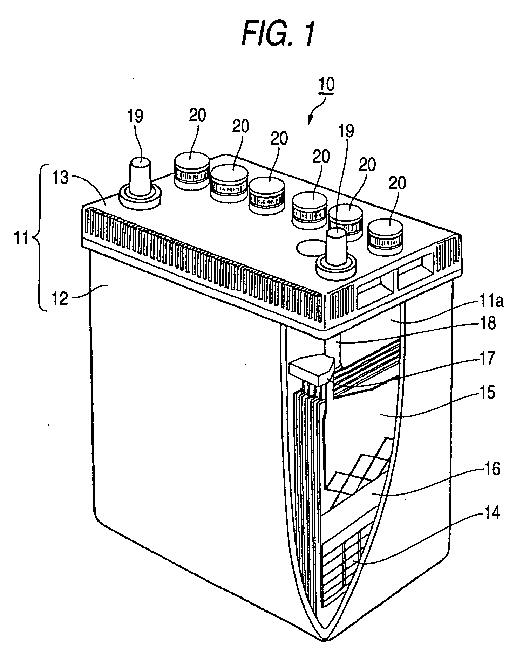

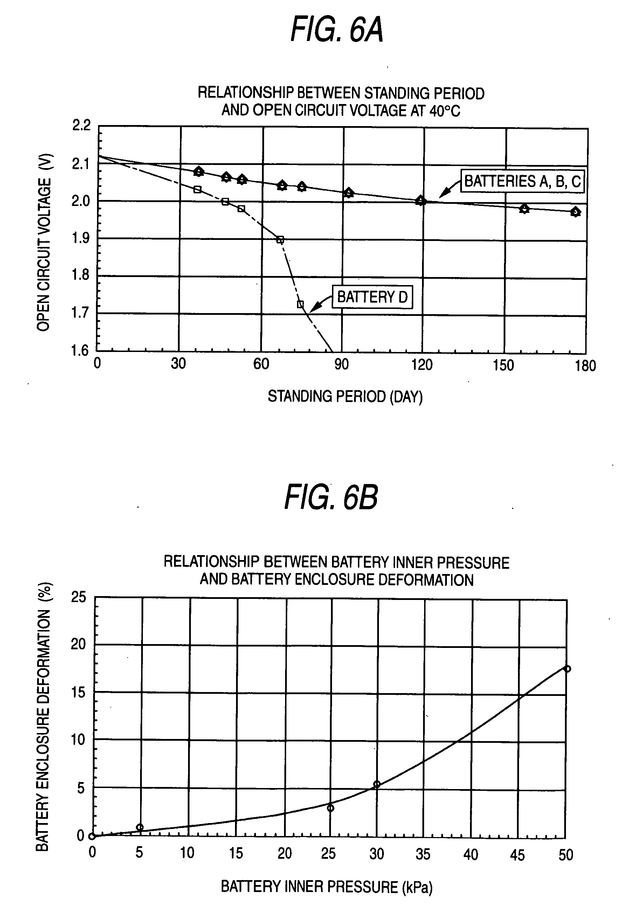

The first embodiment of implication of the invention will be further described in connection with Figs. 1 to 6A and 6B. The lead acid battery according to the present embodiment is a dry-charged lead acid battery free of electrolyte in a battery container having formed electrodes received therein which is rendered usable when the battery container is filled with an electrolyte.

Fig. 1 illustrates an entire perspective view of the dry-charged lead acid battery 10. A battery container 11 comprises a prismatic battery container main body 12 having a closed end and a cover 13 for sealing the opening of the battery container main body 12. The battery container main body 12 has a plurality of cells formed by partitioning the interior thereof by partitions 11a arranged between a pair of opposing sides, though not shown in detail. These cells each have an electrode block having a plurality of sheets of rectangular flat positive electrodes 14 and negative electrodes 15 laminated on each other with the interposition of a separator 16 received therein. These positive electrode blocks and negative electrode blocks are each formed integrally with a strap 17. The positive electrode block and the negative electrode block in these cells are each commonly connected to the base end of each of pole 18 through the strap 17. These poles 18 are connected to positive and negative terminals 19, 19 mounted on the cover 13, respectively.

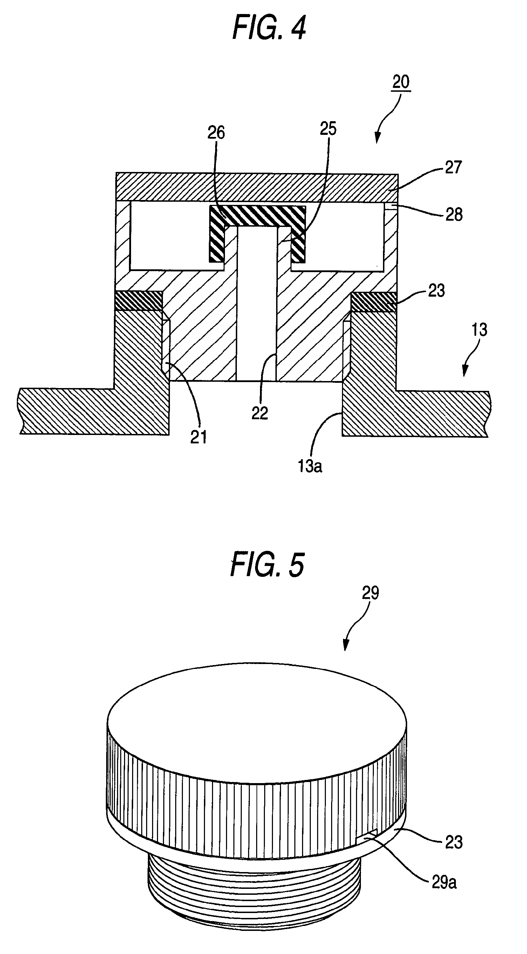

The cover 13 has apertures 13a pierced therethrough corresponding to these cells for filling the electrolyte into the battery container 11 or removing the electrolyte from the battery container 11. These apertures 13a each are sealed with a sealing plug with valve 20 described later. The aperture 13a has a cylindrical portion extending upward along the inner surface thereof. On the inner surface of the cylindrical portion is formed a thread for helically engaging with the sealing plug (see Fig. 4).

The electrodes 14, 15 of the dry-charged lead acid battery 10 according to the present embodiment have been subjected to formation by the formation process in the battery container. In other words, unformed positive and negative electrodes are assembled into a battery into which diluted sulfuric acid as an electrolyte is then put therein through the aperture 13a to cause first charge. Subsequently, the electrolyte is removed through the aperture 13a. The aperture 13a is then sealed with the sealing plug with valve 20. In this manner, a battery container 11 free of electrolyte having formed electrodes received therein, i.e., so-called liquid-free charged battery is formed similarly to the conventional dry-charged lead acid battery. The method for removing the electrolyte is not specifically limited. In practice, however, the electrolyte may be sucked off through the aperture 13a. Alternatively, the lead acid battery may be turned upside and down so that the aperture 13a faces downward to cause the electrolyte to be removed.

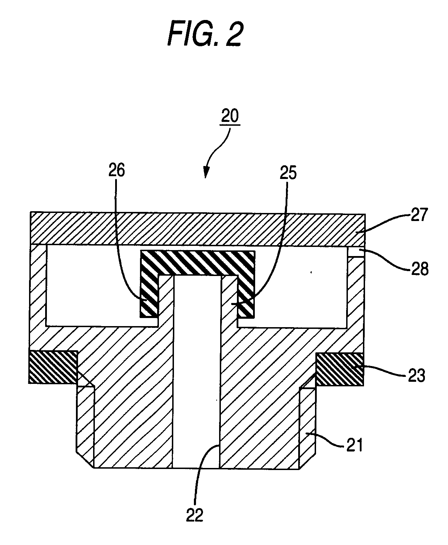

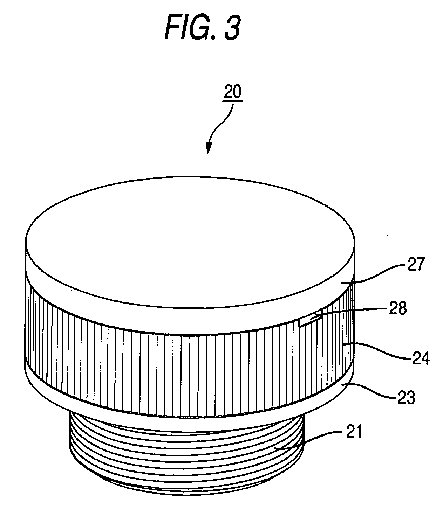

Fig. 2 illustrates a sectional view of the sealing plug with valve 20. Fig. 3 illustrates an entire perspective view of the sealing plug with valve 20. The sealing plug with valve 20 comprises a rubber valve as a valve body. In some detail, the external shape of the sealing plug with valve 20 is a generally stepped column the small diameter portion of which engages with the aperture 13a. The small diameter portion of the column has a thread groove 21 formed on the outer surface thereof and a vent hole 22 pierced longitudinally therethrough for communicating the gas in the battery container 11 to the exterior. An annular packing 23 is fitted on the outer surface of the small diameter portion of the column along the step between the small diameter portion and the great diameter portion. By helically engaging the small diameter portion with the aperture 13a of the cover 13, the packing undergoes elastic deformation between the step surface and the upper surface of the cover 13, causing the sealing plug with valve 20 to be hermetically mounted on the aperture 13a.

On the other hand, the great diameter portion has a knurl 24 formed, e.g., on the outer surface thereof to form a gripping portion for the aperture 13a. The great diameter portion forms a cylinder having a thin wall and having one end of the small diameter portion as bottom surface. The great diameter portion has a rubber valve provided in the inner space thereof. In some detail, the great diameter portion has a cylindrical valve seat portion 25 extending along the inner surface of the vent hole of the small diameter portion. The upper end of the valve seat portion 25 is sealed with a rubber sealing plug 26. A disk-shaped cover 27 having the same diameter as that of the great diameter portion is mounted on the great diameter portion covering the opening of the great diameter portion while pressing against the upper surface of the rubber sealing plug 26. Between the opening end of the great diameter portion and the disk-shaped cover 27 is formed intermittently a clearance portion 28 for causing the gas in the battery container 11 to escape to the exterior.

In this arrangement, the sealing plug with valve 20 also acts as a check valve of the invention. In other words, the valve seat portion 25 normally has the rubber sealing plug 26 airtightly fitted thereon to prevent the passage of the external air (air) and the gas in the battery container 11. On the other hand, when the pressure in the battery container 11 rises beyond a predetermined value with respect to the external pressure, the resulting force pushing up the rubber sealing plug 26 causes the rubber sealing plug 26 to undergo elastic deformation or the like, forming a small gap between the rubber sealing plug 26 and the valve seat portion 25 and hence allowing the passage of the gas from the battery container 11. Accordingly, the gas which has leaked out of the battery container 11 can be released to the exterior through the clearance 28 formed in the great diameter portion.

In order to use the dry-charged lead acid battery 10, the sealing plug with valve 20 is removed for filling of the electrolyte thereinto. After filling, the sealing plug with valve 20 may be again mounted on the aperture 13a. Alternatively, a sealing plug 29 having the same shape as that of the sealing plug with valve 20 as shown in Fig. 5 and a vent hole 29a formed therein communicating to the aperture 13a may be mounted on the aperture 13a.

In the dry-charged lead acid battery 10 prepared by forming the electrodes by the formation process in the battery container, and then removing the electrolyte from the battery, the undried electrodes having the electrolyte attached thereto are allowed to stand exposed to air in the battery container 11. Accordingly, it is apprehended that the metallic lead of the electrodes can undergo oxidation to loose its charge capacity, rendering the battery less ready-to-use.

In accordance with the present inventor's study, the results of analysis of the change of self-discharge amount in a liquid lead acid battery with time during standing show that the "self-discharged amount" decreases proportionally as the "specific gravity of electrolyte" decreases due to discharge reaction. In other words, as the specific gravity of the electrolyte rises, the self-discharged amount rises. On the contrary, as the specific gravity lowers, the self-discharged amount lowers to inhibit discharge. In this respect, the dry-charged lead acid battery prepared by formation in the battery container has the electrolyte left behind on the electrodes in an extremely slight total amount and thus shows an extremely great drop of the specific gravity of the electrolyte per unit discharged amount as compared with the liquid lead acid battery. Accordingly, the dry-charged lead acid battery prepared by formation in the battery container shows a remarkable drop of the specific gravity of the electrolyte with a slight amount of discharge, inhibiting somewhat self-discharge.

In the light of the aforementioned results of analysis, the dry-charged lead acid battery 10 of the present embodiment has a check valve provided therein to further enhance the inhibiting effect. The advantage of the dry-charged lead acid battery 10 will be described hereinafter with reference to specific testing conditions.

Batteries 30 (30A to 30D) to be tested were prepared by removing the electrolyte after formation in the battery container similarly to the aforementioned structure but were different from the aforementioned structure in that the sealing plug to be mounted on the aperture 13a is different. In some detail, the batteries 30A to 30C correspond to the examples of the invention and each have a sealing plug with valve 20 as described in the aforementioned structure. The sealing plugs with valve 20 for the batteries 30A to 30C were adjusted to open at a pressure of 0 kPa (battery 30A), 5 kPa (battery 30B) and 25 kPa (battery 30C), respectively. On the other hand, the battery 30D corresponds to comparative example. The sealing plug for the battery 30D is free of rubber valve and has a vent hole having a diameter of 5 mmφ pierced therethrough for allowing the entrance of the external air into the battery. All of these batteries are the tubular plate type and have a rated capacity of 280 Ah (5 hour rate) at 2 V.

These batteries 30 were each allowed to stand in an atmosphere of 40°C for 6 months, and then evaluated for self-discharge properties. As a result, there was obtained the relationship between the standing period and the open circuit voltage as shown in Fig. 6A. In general, the open circuit voltage of a battery is correlated with the self-discharged amount. The drop of the open circuit voltage indicates the rise of the self-discharged amount. As shown in Fig. 6A, the battery 30D (Comparative Example) shows a sudden drop of open circuit voltage after the passage of a predetermined period of time, although it can be prevented somewhat from undergoing self-discharge. This is presumably because the air can freely enter into the battery through the vent hole in the sealing plug, accelerating the oxidation of the negative electrode 15.

On the contrary, the batteries 30A to 30C (Examples of the invention), which had been adjusted to open at a pressure of from higher than 0 kPa and not higher than 25 kPa, all can be kept at a high level, though showing some drop of open circuit voltage, even after about 6 months of standing. This demonstrates that even a dry-charged lead acid battery prepared by formation by the formation process in the battery container can be prevented from undergoing charge capacity drop due to self-discharge to some extent and thus can be kept highly ready-to-use even after prolonged standing by removing the electrolyte from the battery and then keeping the battery container 11 airtight.

When the battery is subsequently allowed to stand with the sealing plug with valve 20 mounted thereon, the difference in pressure between inside and outside the battery container 11 becomes almost stable substantially equal to the pressure at which the sealing plug with valve 20 opens. Thus, there raises a problem of how much the battery container 11 can withstand the difference in pressure between inside and outside the battery container 11 applied corresponding to the predetermined pressure at which the sealing plug with valve 20 mounted opens. Therefore, the dry-charged lead acid battery 10 according to the present embodiment was then tested for durability of the battery container 11 (made of polypropylene) shown when the battery was allowed to stand with sealing plugs with valve 20 which open at a pressure of 0 kPa, 5 kPa, 25 kPa, 30 kPa and 50 kPa, respectively, mounted thereon.

The batteries 30E to 30J to be tested all were prepared by removing the electrolyte after formation by the formation process in the battery container similarly to the aforementioned structure. The batteries 30E to 30J were then subjected to standing test under pressure free of sealing plug with valve 20 on the aperture 13a. During this standing test under pressure, air was pressed into the battery by a compressor so that the difference in pressure between inside and outside the battery was set to 0 kPa (battery 30E), 5 kPa (battery 30F), 25 kPa (battery 30G), 30 kPa (battery 30H) and 50 kPa (battery 30I), respectively. The external pressure was defined to be 0 kPa. The test period was 1 year, which is normally considered to be the limit of period of time during which a battery can be stored.

As a result, there was obtained the relationship between the battery inner pressure and the battery container deformation of the batteries 30F to 30I as shown in Fig. 6B. As shown in Fig. 6B, when the battery inner pressure exceeds 25 kPa, the battery container deformation increases.

Table 1 shows the relationship between the battery inner pressure and the time at which defective airtightness occurs as a result of the test. As can be seen in the results, the battery with a pressure difference of not higher than 50 kPa shows no defective airtightness and thus can be stored over a period of time as relatively short as 4 months. Preferred among these batteries are batteries 30E to 30G, which were compressed at a pressure of from 0 to 25 kPa. These batteries undergo no defective airtightness after 1 year of standing.

**Table 1:**

| Batter inner pressure and time at which defective airtightness occurs | |
|---|---|
| Battery inner pressure (kPa) | Time at which defective airtightness occurs |
| 0 (battery E) | No defective airtightness |
| 5 (battery F) | No defective airtightness |
| 25 (battery G) | No defective airtightness |
| 30 (battery H) | 9.5 months |
| 50 (battery I) | 4 months |

While the advantage of the invention has been described with reference to the tubular plate type battery in the present embodiment, the same advantage can be obtained for the battery of pasted plate type.

In accordance with the dry-charged lead acid battery 10 of the invention, the number of steps required for preparation can be reduced as compared with the dry-charged lead acid battery 10 assembled from formed electrodes. Thus, the dry-charged lead acid battery 10 of the invention can be easily produced at a reduced cost. Further, the self-discharge of battery during the storage period between the filling of the electrolyte and the beginning of use of the battery can be inhibited, making it possible to keep the battery highly ready-to-use. At the same time, defective airtightness due to damage of battery container by the production of gas in the battery can be inhibited.

### <Second embodiment>

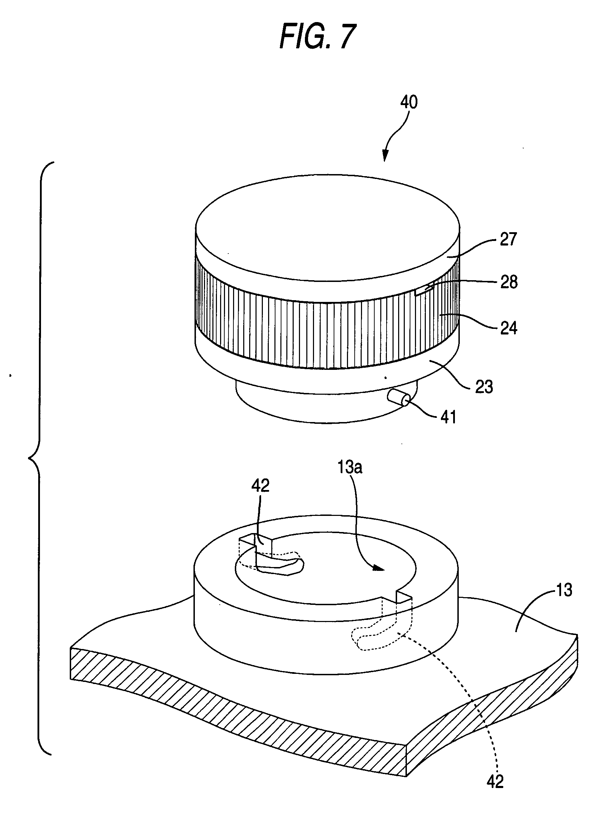

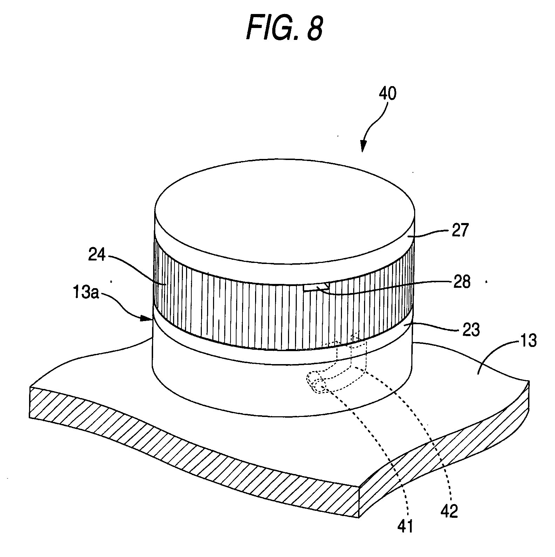

Figs. 7 and 8 each indicate a second embodiment. The second embodiment is the same as the first embodiment except the structure for mounting the sealing plug with valve on the aperture 13a. Thus, like numerals are used for like components in the first and second embodiments. The description of these components will be omitted. Only the components different from those of the first embodiment will be described below.

As shown in Fig. 7, the small diameter portion of the sealing plug with valve 40 has a pair of protrusions 41, 41 (only one of the two protrusions shown)provided at positions symmetrical about the central axis thereof, respectively. On the inner surface of the aperture 13a are formed a pair of guide grooves 42, 42 corresponding to the protrusions 41, 41, respectively.

In some detail, the pair of guide grooves 42, 42 each extend deep in the aperture 13a from the opening end thereof, extend obliquely in the same circumferential direction and then are curved at the forward end in the same circumferential direction. In order to mount the sealing plug with valve 40 on the aperture 13a, the sealing plug with valve 40 is pushed toward the cover 13 while the protrusions 41, 41 being registered on the base end of the guide grooves 42, 42, respectively, and then rotated in a predetermined direction when it reaches some point. In this manner, the protrusions 41, 41 move along the inclined portion of the guide grooves 42, 42, respectively, so that the sealing plug with valve 40 is gradually pushed toward the cover 13 to cause the aforementioned packing to undergo elastic deformation therebetween. By then rotating the sealing plug with valve 40, the protrusions 41, 41 run onto and are fixed on the forward end of the guide grooves 42, 42, respectively (see Fig. 8). In this arrangement, too, the sealing plug with valve 40 can be hermetically mounted on the aperture 13a.

### <Other embodiments>

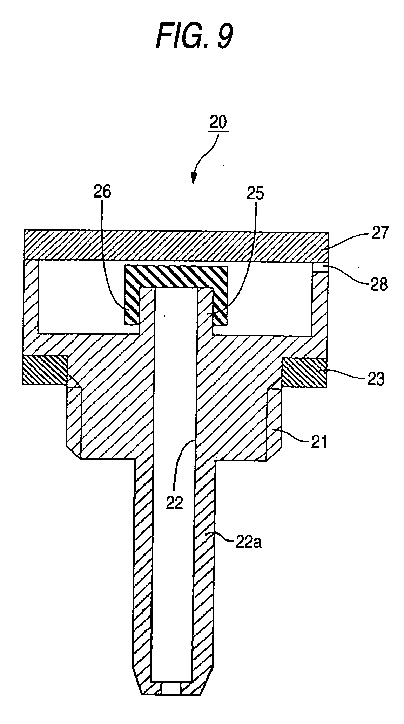

The invention is not limited to the aforementioned embodiments. For example, the embodiment described below is included in the technical scope of the invention. Further, various changes and modifications can be made therein without departing from the spirit of the invention.
(1) While the aforementioned embodiments have been described with reference to the structure comprising a check valve provided in a sealing plug, the invention is not limited thereto. A check valve may be provided between the interior and the exterior of the battery container 11 besides in the sealing plug. In this case, the check valve may be mounted with the electrodes or the like during the assembly of battery before formation in the battery container.
(2) While the aforementioned embodiments have been described with reference to the structure comprising a check valve 13 provided in a sealing plug 20 wherein the lower surface of the sealing plug 20 is above the lower surface of the battery container cover 13, but the invention is not limited thereto. As shown in Fig. 9, the sealing plug 20 may have a cylindrical portion 22a communicating with a vent hole 22 wherein the length of the cylindrical portion is decided such that the top of the cylindrical portion is positioned above the surface of the electrolyte when the battery is in the normal position or even in the upside-down position during storage. Even if the battery having a remaining electrolyte accidentally becomes upside-down during transportation, this constitution can avoid leakage of the electrolyte through the vent hole 22. In addition, the smaller hole diameter of the vent hole at the top of the cylindrical portion 22a is more effective for the prevention of the leakage of the electrolyte.

While the invention has been described in detail and with reference to specific embodiments thereof, it will be apparent to one skilled in the art that various changes and modifications can be made therein without departing from the scope thereof.

This application is based on Japanese patent application No. 2001-105271 filed April 3, 2001, the entire contents thereof being hereby incorporated by reference.

## Claims

1. A dry-charged lead acid battery comprising the following elements, which is usable upon filling of an electrolyte thereinto:
a battery container having an opening;
a cover for closing the opening of said battery container;
positive and negative electrodes having been received unformed in said battery container and then having been subjected to formation in said battery container;
a aperture formed in said cover for discharging the electrolyte used for formation and filling said battery container with the battery electrolyte upon use;
a sealing plug for closing said aperture; and
a check valve provided in said sealing plug for preventing the entrance of the external air into said battery container as well as allowing the leakage of the gas in said battery container to the exterior under the condition that the difference between the atmospheric pressure and the pressure in said battery container should exceed a predetermined valve pressure,
wherein said valve pressure is predetermined to a range of from higher than 0 kPa and not higher than 50 kPa.

2. The dry-charged lead acid battery according to Claim 1, wherein said check valve is removably provided and comprises a sealing plug body which is mounted after the removal of said check valve.

3. The dry-charged lead acid battery according to Claim 1, wherein said sealing plug comprises the following elements:
a sealing plug body having a concave portion formed at one end thereof and a vent hole pierced therethrough from the other end thereof which is mounted on said aperture to said concave portion;
a cylindrical valve seat provided in said concave portion and communicated to said vent hole;
a valve body comprising an elastic material and fitted on said valve seat covering the forward end thereof; and
a valve holding cover for closing said concave portion in such a manner that said concave portion can be vented while covering the upper surface of said valve body.

4. A process for the production of a dry-charged lead acid battery comprising the following steps:
a first step of assembling an unformed lead acid battery;
a second step of filling said lead acid battery with an electrolyte through a aperture after the first step and subjecting said lead acid battery to formation in battery container;
a third step of removing said electrolyte through said aperture after the second step;
a fourth step of storing said lead acid battery after the third step; and
a fifth step of mounting a check valve in such an arrangement that it covers said aperture after the third step or during the fourth step, said check valve being adapted to prevent the entrance of the external air into said battery container as well as allow the leakage of the gas in said battery container to the exterior under the condition that the difference between the atmospheric pressure and the pressure in said battery container should exceed a predetermined valve pressure wherein said valve pressure is predetermined to a range of from higher than 0 kPa and not higher than 50 kPa.

5. The process for the production of a dry-charged lead acid battery according to Claim 4, wherein said lead acid battery is stored with said check valve being mounted thereon until the beginning of the use thereof.
